# EUROPEAN PATENT APPLICATION

(11) **EP 3 032 795 A1**
(43) Date of publication of application: **15.06.2016**
(21) Application number: 14474001.6
(22) Date of filing: 11.12.2014
(51) Int. Cl.: H04L 29/06

(54) **Identification module for two-factor authentication with any longitudinal mechanical oscillation of air such us sound waves as a transmission channel**

(71) Applicant: Tatra banka, a. s., 811 06 Bratislava (SK)
(72) Inventor: Kopriva, Peter, 821 06 Bratislava (SK); Bojkovsky, Juraj, 831 01 Bratislava (SK)

(57) **Abstract**

Portable hardware token generating code for authenticating the holder in information systems of the provider of the remote electronic services, electronic banking, the sale of goods and services through unsecured public networks. The token shows the control data and generates code representing numeric, alphanumeric, special one-time code (one time password - OTP) witch each use. (1) Control data and the code are transmitted by any longitudinal mechanical oscillation of air from / to a reading device for user authentication purposes.(1)

## Description

### Field of Technology

The invention relates to two-factor authentication method in information systems. User, client or customer of these systems usually claims its identity with the help of uniquely assigned identifier (name, aliases, PID), passwords and/or one-time code generated by special hardware/software token. After verifying the validity all of the identifiers the service is provided to the appropriate user or access to the information system respectively.

### Background of the Invention

The existing solutions used as a second factor of authentication special facilities for generating one-time-use code ("one time password" - hereinafter OTP) or mobile communication tool owned by the user who, through a unique application generates an OTP or OTP is generated on the part of the service provider and through public communication network is delivered to a mobile communication tool of the user. The communication channel used to deliver OTP is different from the communication channel used to provide services or access by the service provider / information system. Such a system of authentication is referred to as the OOB - out of band. With the advent of mobile devices, as the main working tool for communicating with entities providing electronic services, in some cases is impossible not only to use the same authentication mobile communication tool but is also possible to misuse it by unauthorized persons through control of OTP generating application respectively by control or interception of the communication channel, which is providing the service itself or the provision of OTP. OTP generated by special module or special application also requires retyping the generated code, usually numeric or alphanumeric, to the logon fields of application of the service provider. In the case of high security or high demands for the complexity of generated code it is a high probability of erroneous transcription of the OTP code by the user. The risk of this error is further increased in case of OTP code, which requires for its calculation input data entered by the user, for example. personal number. Thus the range of input data is limited, to minimize transcription error, to the extent necessary to achieve an adequate level of security. In addition the special mobile applications do not use HW storage for storing a unique key, which is needed to generate the OTP. It is caused by different technologies applied to individual mobile communication devices from different manufacturers and lacks of standards. There is therefore a some chance of the theft, it means creating a regular copies of such application with its internal status. Thus, such equipment is not resistant to clone.

### Substance of the Invention

These shortcomings are eliminated by the new proposed module which is integrated into the special single-purpose portable hardware device (the token), which alone generates authentication or authorization code. The token two-way communicates with the target device via the transmission channel. The data transmission is longitudinal mechanical oscillation of air in the range of audible sound in the band 10 Hz - 20 kHz or in different band. The token is equipped with a microphone for receiving input data and speaker to broadcast answers. The token displays the input data on the display. Input data can thus be visually inspected by the user. Such a system of generation and transmission is resistant to change data during transmission, to the misuse of the code itself since the data used as input for generation are known to the user and having a link with the required service, to cloning abuse and against errors arising in the retyping of the code to the appropriate application. Moreover, this solution can therefore increase the security of the entire information system by increasing the complexity of generated code, from approx. 8 characters, as is usual today, to several thousand characters. The reader of such a token can be any device equipped with a microphone and speaker, for example mobilephone/smartphone or PC equipped with appropriate peripheral devices.

The token is equipped with a power source, display unit, switch or set of switches to trigger the generation of different types of codes, connector plug or contact surface respectively, integrated circuit serving individual peripherals, microphone and speaker.

A contact surface or a connector respectively is used to initialize the device when placed in service. This option may not be used when the initialization performs both the production facility.

### Industrial application

Said device can be used as one-time code generator (one time password - OTP), for the purpose of authentication and authorization process during the communication with entities providing electronic services.

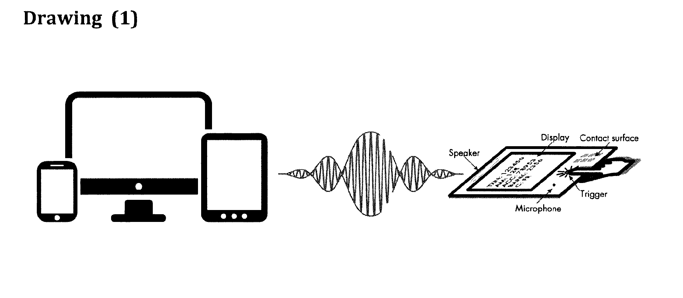

## Claims

1. A special single-purpose dedicated hardware device (token) using any longitudinal mechanical oscillation of air as a channel for two-way transmission of information.

2. A system of security information exchange via any communication channel using any longitudinal mechanical oscillation of air on two-way transmission of information.
